# FASCICULE DE BREVET EUROPEEN

(11) **EP 0 827 460 B1**
(45) Date de publication et mention de la délivrance du brevet: **14.03.2001**
(21) Numéro de dépôt: 95920953.7
(22) Date de dépôt: 18.05.1995
(51) Int. Cl.: B60C 11/04, B60C 11/12

(54) **BANDE DE ROULEMENT POUR PNEU "POIDS-LOURDS"**
LAUFFLÄCHE FÜR "LKW"-REIFEN
TREAD FOR TRUCK TYRE

(43) Date de publication de la demande: 11.03.1998
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: HENRY, Marc, F-63400 Chamalières (FR); MARTIN, Didier, F-63530 Chanat-la-Mouteyre (FR)
(74) Mandataire: Devaux, Edmond-Yves
(86) Numéro de dépôt international: FR9500650
(87) Numéro de publication internationale: WO9636501

(56) Documents cités:
- EP-A- 0 384 182
- DE-A- 2 921 377
- GB-A- 2 093 777

## Description

La présente invention concerne un pneumatique de type "Poids-Lourds", c'est-à-dire destiné à rouler sur des camions, autobus, tracteurs routiers, et plus particulièrement un pneumatique destiné à être monté sur un essieu soumis à un couple moteur.

Le brevet FR 2 643 312, correspondant au préambule de la revendication 1, afin d'améliorer l'usure des bords de fuite des éléments en relief d'une bande de roulement pour pneumatique "Poids-Lourds", quel que soit l'essieu sur lequel il sera monté, et lesdits éléments étant dans le sens axial délimités par des rainures circonférentielles et dans le sens circonférentiel par des incisions de largeur non nulle et au plus égale à 3 mm, propose d'incliner lesdites incisions, par rapport à la direction normale à la surface de bande de roulement, d'un angle compris entre 5° et 25°, de sorte que la force tangentielle résultante (freineuse pour un pneumatique non soumis à un couple moteur ou motrice dans le cas d'un pneumatique soumis à un couple moteur) exercée par le sol sur la bande de roulement, tende à redresser les incisions vers une inclinaison nulle. L'inclinaison de telles incisions se montre par ailleurs particulièrement avantageuse dans le cas de bande de roulement pourvue de rainures circonférentielles dites larges.

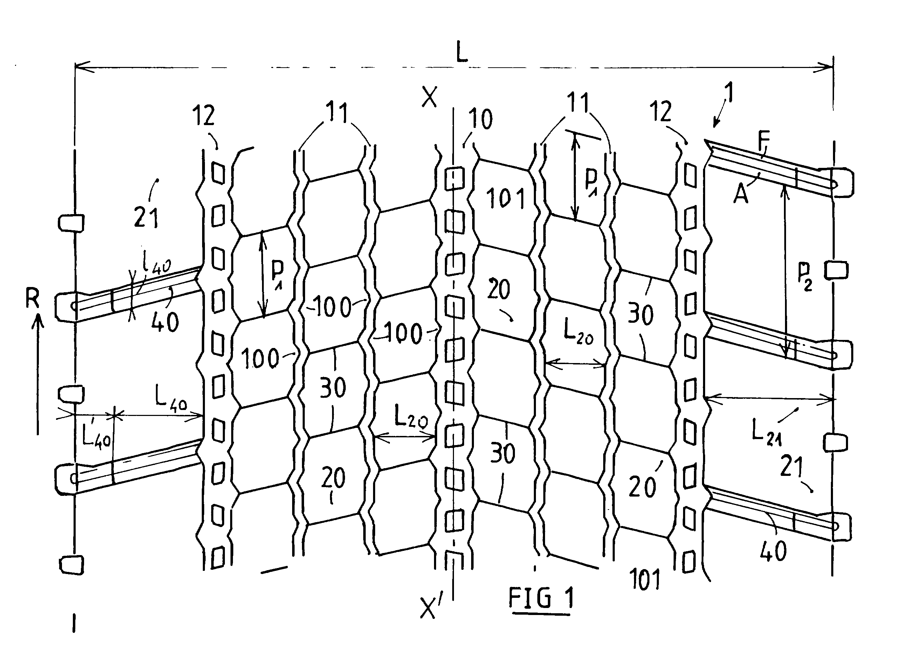

Ledit brevet décrit, à titre d'exemples d'application, des pneumatiques ayant un nombre variable de rainures circonférentielles larges. Ce nombre varie de 1 (rainure centrale des figures 5 et 8) à 4 (figure 1) en passant par 2 (figure 3), les autres rainures circonférentielles étant des rainures dites étroites. D'après ledit brevet, il faut entendre par rainure circonférentielle large une rainure dont la largeur mesurée sur la bande de roulement du pneumatique, monté sur sa jante de service et gonflé à la pression recommandée, est supérieure à 1,7 fois la racine carrée de la hauteur de la paroi la plus grande de ladite rainure. Une rainure sera dite étroite si sa largeur est inférieure à 1,2 fois la racine carrée de la hauteur de la paroi la plus grande. Le même brevet montre (figure 8) et décrit en outre une bande de roulement comprenant une seule rainure centrale large, et de part et d'autre de ladite rainure trois rainures étroites de sorte à former six nervures centrales, la bande de roulement possédant en outre deux nervures latérales, démunies de toutes rainures et/ou incisions transversales ou obliques et abaissées radialement par rapport au profil transversal moyen des nervures centrales.

De telles structures de bande de roulement permettent non seulement de remédier aux formes d'usure irrégulière connues et en conséquence d'améliorer nettement la longévité sur usure de la bande de roulement, mais encore de conserver une bonne tenue du pneumatique vis à vis des phénomènes d'hydroplanage et de viscoplanage, lesdites améliorations étant nettement accentuées dans le cas de roulage sur essieu directeur ou simplement porteur. Par contre, les pneumatiques ayant de telles bandes de roulement ne semblent pas parfaitement adaptés à un roulage sur essieu moteur, du fait que ce roulage accentue la vitesse d'usure, le niveau acoustique ainsi que la consommation de carburant, tout en exigeant une très bonne adhérence du pneumatique.

Afin d'améliorer les performances relatives au bruit, à la résistance au roulement d'un pneumatique de type "Poids-Lourds", ayant une armature de sommet composée d'au moins de deux nappes de sommet de travail et destiné à équiper un essieu de véhicule soumis à un couple moteur, tout en conservant d'excellentes propriétés d'usure et d'adhérence, l'invention propose de combiner la présence sur les nervures centrales d'incisions, de largeur non nulle au plus égale à 3 mm, inclinées par rapport à la direction perpendiculaire à la surface de bande de roulement et telles que la force tangentielle résultante, exercée par le sol sur la bande de roulement, tende à redresser les incisions vers une inclinaison nulle, avec un certain nombre de caractéristiques relatives à une structure précise de la bande de roulement. Conformément à l'invention, la bande roulement comprend :
- trois rainures circonférentielles larges, l'une dite centrale est centrée sur le plan équatorial du pneumatique, les deux autres dites latérales sont axialement à l'extérieur,
- entre la rainure centrale et chaque rainure latérale, deux rainures circonférentielles étroites,
- lesdites rainures circonférentielles ayant des profondeurs au plus égales à 0,016 fois le diamètre du pneumatique, monté sur sa jante de service et gonflé à la pression recommandée, ledit diamètre étant mesuré dans le plan équatorial,
- lesdites rainures définissant, d'une part six nervures centrales d'égales largeurs axiales au plus égales à 0,1 fois la largeur axiale de la bande de roulement et pourvues d'incisions transversales inclinées par rapport à des perpendiculaires à la surface de bande de roulement d'un angle compris entre 10° et 14°, et d'autre part deux nervures latérales, chacune des nervures ayant une largeur axiale au moins égale au double de la largeur commune des nervures centrales, lesdites nervures latérales étant pourvue de rainures transversales larges.

Des incisions et/ou des rainures sont dites transversales si leur orientation moyenne fait avec la direction circonférentielle de la bande de roulement un angle au moins égal à 70°. Des rainures transversales sont dites larges si elles répondent à la définition donnée ci-dessus pour des rainures circonférentielles larges.

De manière avantageuse, les rainures transversales larges auront une profondeur axialement variable. En particulier, un très bon compromis de propriétés recherchées est obtenu si lesdites rainures ont, sur une distance axiale, égale à au moins les 2/3 de leur longueur, une profondeur comprise entre 0,5 et 1 fois la profondeur maximale des rainures circonférentielles, et sur la longueur restante une profondeur au plus égale au tiers de ladite profondeur maximale.

Il est par ailleurs avantageux que les rainures circonférentielles larges latérales soient radialement renforcées par au moins une nappe de l'armature de sommet sous-jacente.

Préférentiellement, les parois des rainures transversales feront avec la direction perpendiculaire à la bande de roulement des angles de dépouille différents, l'angle formé par la paroi d'attaque de chaque rainure transversale étant supérieur à l'angle formé par la paroi de fuite (la paroi d'attaque étant la paroi pénétrant la première en roulage dans l'aire de contact entre le pneumatique et le sol).

Etant donné la présence d'incisions inclinées dans un sens prescrit, le pneumatique peut avantageusement être muni sur son flanc extérieur d'une flêche indiquant son sens de rotation correspondant à la marche en avant du véhicule équipé, la force motrice exercée par le sol étant une force de même sens que le sens d'avancement du véhicule. Ledit pneumatique peut aussi porter sur son flanc la mention " essieu moteur" ou une mention équivalente.

Le dessin et la partie de la description qui y fait référence illustrent un exemple d'application à titre non limitatif. Sur ce dessin,
- la figure 1 représente schématiquement, vue en plan et de dessus, une bande de roulement conforme à l'invention,

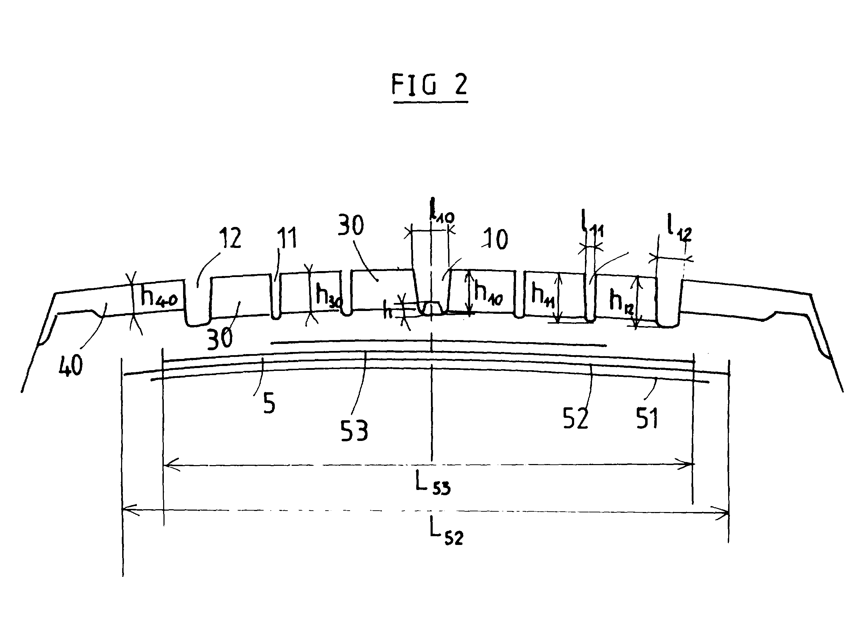

- la figure 2 représente schématiquement, vu en coupe transversale, le sommet du pneumatique comportant la bande de roulement de la figure 1.

Le pneumatique P de dimension 315/80 R 22.5 X a une bande de roulement (1) de largeur L, égale à 246 mm, ladite largeur étant la distance axiale maximale séparant les deux extrémités de la bande de roulement et mesurée parallèlement à l'axe de rotation du pneumatique, ce dernier étant monté sur sa jante de service, gonflé à la pression recommandée et portant la charge recommandée. Le pneumatique P, monté et gonflé, a un diamètre sommet D_{S}, mesuré dans le plan équatorial égal à 1080 mm.

La bande de roulement (1), destinée à rouler selon le sens de rotation R, comprend une rainure circonférentielle large (10), de profondeur h₁₀ égale à 15,0 mm, ce qui correspond approximativement à 0,014 fois D_{S}, et de largeur l₁₀ égale à 12 mm, centrée sur le plan équatorial XX'. De part et d'autre dudit plan et de la rainure centrale (10) sont disposées de chaque côté deux rainures circonférentielles étroites (11), de profondeur h₁₁, égale à h₁₀, et de largeur l₁₁ très inférieure à l₁₀, puisqu'égale à 3 mm. Axialement à l'extérieur des rainures étroites (11), de chaque côté du plan équatorial, est disposée une rainure circonférentielle large (12) de profondeur h₁₂, égale à h₁₀ et h₁₁ et de largeur l₁₂ de 9 mm, c'est-à-dire inférieure à la largeur l₁₀ de la rainure centrale (10). Qu'elles soient étroites ou larges, lesdites rainures circonférentielles présentent dans leurs tracés sur la surface de bande de roulement des saillies (100) rentrantes et sortantes de faible dimension. Les rainures larges sont en outre munies à leurs bases de protubérances ou plots (101) dont les hauteurs h sont égales à 4 mm.

L'ensemble de ces rainures circonférentielles délimitent entre elles six nervures centrales (20) de largeur L₂₀, égale à 20 mm, c'est-à-dire inférieure au dixième de la largeur de bande de roulement et deux nervures latérales (21) de largeur L₂₁, égale à 41,5 mm.

Les nervures centrales (20) sont pourvues d'incisions (30) inclinées, par rapport à la direction perpendiculaire à la surface de bande de roulement d'un angle égal à 12°. Lesdites incisions ont une épaisseur non nulle, égale à 0,4 mm, et leurs tracés sur la bande de roulement sont rectilignes, orientés par rapport à la direction circonférentielle d'un angle de 75°, parallèles entre eux et uniformément répartis sur la circonférence, deux incisions adjacentes étant séparées circonférentiellement l'une de l'autre d'une quantité p₁, constante circonférentiellement et égale à 28 mm. Lesdites incisions ont une profondeur h₃₀ égale à 14,5 mm, c'est-à-dire légèrement inférieure à la profondeur commune h₁₀, h₁₁, h₁₂ des rainures circonférentielles (10), (11) et (12), ladite profondeur h₃₀ étant mesurée perpendiculairement à la surface de bande de roulement. Les deux nervures latérales (21) sont pourvues de rainures transversales larges (40), c'est-à-dire dont la largeur 140, mesurée sur la surface de bande de roulement parallèlement au plan équatorial, et égale à 8 mm, répond à la définition d'une rainure large telle que définie ci-dessus. Quant à la profondeur h₄₀ de chacune de ces rainures (40), elle est axialement variable, de sorte qu'elle soit égale à 10 mm axialement à l'intérieur sur une distance axiale L₄₀ de 29 mm, et de 5 mm sur la distance axiale restante L'₄₀.

Les incisions (30) des nervures centrales (20) peuvent être disposées sur la surface de bande de roulement non parallèles entre elles et circonférentiellement avec un pas variable ; il peut en être de même pour les rainures transversales (40) des nervures latérales (21) ; la distance circonférentielle entre deux incisions (30) ou rainures transversales (40) est alors une distance moyenne mesurée parallèlement au plan équatorial XX' entre les deux directions moyennes des incisions ou rainures. La distance circonférentiellement minimale, séparant deux rainures transversales larges (40) de nervures latérales (21), est au moins égale à la distance circonférentiellement minimale, séparant deux incisions (30) de nervures centrales (20) circonférentiellement adjacentes. Dans l'exemple montré, la distance circonférentielle p₂ entre deux rainures transversales adjacentes (40) des nervures latérales (21), constante axialement entre les deux rainures et constante circonférentiellement, est égale à deux fois la distance axiale p₁ existante entre les incisions (30) des nervures centrales (20).

La bande de roulement ainsi décrite surmonte radialement une armature de sommet (5), formée de quatre nappes de sommet. La nappe la plus radialement à l'intérieur est une nappe dite de triangulation (51), dont les câbles métalliques inextensibles font avec la direction circonférentielle du pneumatique un angle égal à 65°. Les deux nappes radialement à l'extérieur de la nappe (51) sont dites nappes de sommet de travail (52) et (53), et sont formées de câbles métalliques inextensibles, croisés d'une nappe (52) à la suivante (53) en formant avec la direction circonférentielle un angle faible de 18°. Les largeurs axiales L₅₂ et L₅₃ sont telles que la distance axiale L₁₀ entre les deux parois axialement les plus à l'extérieur des deux rainures latérales (12) soit au moins inférieure à la largeur L₅₂ (L₅₃) la plus grande, et préférentiellement inférieure aux deux largeurs, de sorte que les fonds de rainures larges (12) latérales soient renforcées par au moins une couche de câbles métalliques inextensibles. L'armature de sommet est généralement complétée par une nappe dite de protection, située radialement à l'extérieur et formée de câbles dits élastiques.

## Revendications

1. Bande de roulement (1), pour pneumatique doté d'une armature de sommet (5) composée d'au moins de deux nappes de sommet de travail (52) et (53) et portant sur ses flancs une mention indiquant qu'il doit être monté sur un essieu soumis à un couple moteur et un moyen de marquage indiquant le sens de rotation correspondant à la marche en avant du véhicule équipé, comprenant des rainures circonférentielles larges (10, 12) et étroites (11) définissant entre elles des nervures circonférentielles (20) pourvues d'incisions transversales (30), inclinées par rapport à la direction perpendiculaire à la surface de bande de roulement telles que la force tangentielle motrice résultante, exercée par le sol sur la bande de roulement, tende à redresser les incisions vers une inclinaison nulle, caractérisée en ce qu'elle comprend trois rainures circonférentielles larges (10, 12), dont l'une (10) dite centrale est centrée sur le plan équatorial XX' du pneumatique, et dont les deux autres (12) dites latérales sont axialement à l'extérieur, et entre la rainure centrale (10) et chaque rainure latérale (12) deux rainures circonférentielles étroites (11), lesdites rainures circonférentielles (10, 11, 12) ayant des profondeurs h₁₀, h₁₁, h₁₂ au plus égales à 0,016 fois le diamètre du pneumatique D_{S}, monté sur sa jante de service et gonflé à la pression recommandée, mesuré dans le plan équatorial, lesdites rainures (10, 11, 12) définissant d'une part six nervures centrales (20) d'égale largeur axiale L₂₀ au plus égale à 0,1 fois la largeur axiale L de la bande de roulement (1) et pourvues d'incisions transversales (30) inclinées d'un angle compris entre 10° et 14°, et d'autre part deux nervures latérales (21), chacune des nervures (21) ayant une largeur axiale L₂₁ au moins égale au double de la largeur commune L₂₀ des nervures centrales (20) et étant pourvue de rainures transversales larges (40).

2. Bande de roulement (1) selon la revendication 1, caractérisée en ce que les rainures transversales larges (40) ont une profondeur h₄₀ axialement variable, comprise entre 0,5 et 1 fois la profondeur maximale des rainures circonférentielles sur une distance axiale L₄₀, égale à au moins les 2/3 de leur longueur, et au plus égale au tiers de ladite profondeur maximale sur la longueur restante L'₄₀.

3. Bande de roulement (1) selon l'une des revendications 1 ou 2, caractérisée en ce que la distance circonférentielle p₂ entre deux rainures transversales (40) de nervures latérales (21), constante axialement et circonférentiellement, est au moins égale à deux fois la distance p₁ existante entre deux incisions (30) de nervures centrales (20), ladite distance étant constante axialement et circonférentiellement, les distances p₁ et p₂ étant mesurées sur la surface de bande de roulement.

4. Bande de roulement selon l'une des revendications 1 à 3, caractérisée en ce que la paroi d'attaque (A) de chaque rainure transversale (40) de nervure latérale (21) fait avec la direction perpendiculaire à la surface de bande de roulement un angle de dépouille Â plus grand que l'angle de dépouille β fait par la paroi de fuite (F) de la même rainure (40), la différence Â - β étant au moins égale à 7°.

5. Pneumatique comportant une bande de roulement (1) selon l'une des revendications 1 à 4, caractérisée en ce qu'il comprend une armature de sommet (5) composée d'au moins deux nappes de travail (52) et (53) de câbles métalliques inextensibles croisés d'une nappe (52) à la suivante (53) en formant avec la direction circonférentielle des angles compris entre 10° et 30°, les largeurs axiales L₅₂ et L₅₃ des nappes (52) et (53) étant telles que la distance axiale L₁₀ entre les deux parois axialement les plus à l'extérieur des deux rainures latérales (12) soit au moins inférieure à la largeur L₅₂ (L₅₃) la plus grande, et préférentiellement inférieure aux deux largeurs.

## Patentansprüche

1. Lauffläche (1) für einen mit einer Scheitelbewehrung (5) versehenen Luftreifen, die aus mindestens zwei Arbeits-Scheitellagen (52) und (53) zusammengesetzt ist, und der auf seinen Flanken eine Angabe trägt, die angibt, daß er auf einer Achse angebracht werden muß, die einem Antriebsmoment unterzogen ist, sowie ein Markierungsmittel, das die Drehrichtung in Übereinstimmung mit der Vorwärtsfahrt des ausgestatteten Fahrzeugs angibt, mit breiten (10, 12) und schmalen (11) Umfangsrillen, die zwischeneinander Umfangsrippen (20) festlegen, die mit querverlaufenden Einschnitten (30) versehen sind, die in Bezug auf die Richtung senkrecht zur Lauffläche derart geneigt sind, daß die resultierende, antreibende Tangentialkraft, die vom Boden auf die Lauffläche ausgeübt wird, danach trachtet, die Einschnitte zu einer Neigung null geradezurichten, dadurch gekennzeichnet, daß es drei breite Umfangsrillen (10, 12) aufweist, von denen die eine (10), die mittige genannt wird, auf die Äquatorialebene XX' des Reifens zentriert ist, und von denen die anderen beiden (12), die seitliche genannt werden, axial außenliegen, sowie zwischen der mittigen Rille (10) und jeder seitlichen Rille (12) zwei schmale Umfangsrillen (11), wobei die genannten Umfangsrillen (10, 11, 12) Tiefen h₁₀, h₁₁, h₁₂ aufweisen, die höchstens gleich dem 0,016-fachen des Durchmessers D_{S} des Reifens sind, wenn dieser auf seiner Einsatzfelge montiert ist und auf den empfohlenen Druck aufgepumpt ist, gemessen in der Äquatorialebene, wobei die genannten Rillen (10, 11, 12) einerseits sechs mittige Rippen (20) bilden, mit gleicher Breite L₂₀ von höchstens dem 0,1-fachen der axialen Breite L der Lauffläche (1) und mit querverlaufenden Einschnitten versehen, die um einen Winkel geneigt sind, der zwischen 10° und 14° liegt, und andererseits zwei seitliche Rippen (21), und wobei jede der Rippen (21) eine axiale Breite L₂₁ aufweist, die mindestens gleich ist dem Doppelten der gemeinsamen Breite L₂₀ der mittigen Rippen (20), und die mit querverlaufenden, breiten Rillen (40) versehen sind.

2. Lauffläche (1) nach Anspruch 1, dadurch gelennzeichnet, daß die breiten, querverlaufenden Rillen (40) eine axial variable Tiefe h₄₀ haben, die zwischen dem 0,5-fachen und dem 1-fachen der maximalen Tiefe der Umfangsrillen über einen axialen Abstand L₄₀ liegt, der mindestens gleich 2/3 ihrer Länge ist, und höchstens gleich dem Drittel der genannten maximalen Tiefe über die verbleibende Länge L'₄₀.

3. Lauffläche (1) nach einem der Ansprüche 1 oder 2, dadurch gekennzeichnet, daß der Umfangsabstand p₂ zwischen zwei querverlaufenden Rillen (40) der seitlichen Rippen (21), der axial und in Umfangsrichtung konstant ist, mindestens gleich ist dem zweifachen des Abstandes p₁, der zwischen zwei Einschnitten (30) der mittigen Rippen (20) vorliegt, wobei der genannte Abstand axial und in Umfangsrichtung konstant ist, und wobei die Abstände p₁ und p₂ auf der Oberfläche der Lauffläche gemessen sind.

4. Lauffläche nach einem der Ansprüche 1 bis 3, dadurch gekennzeichnet, daß die angreifende Wand (A) einer jeden querverlaufenden Rille (40) der seitlichen Rippe (21) zur Richtung senkrecht zur Oberfläche der Lauffläche einen Schrägwinkel Â bildet, der größer ist als der Schrägwinkel β, der durch die ablaufende Wand (F) derselben Rille (40) gebildet wird, wobei die Differenz Â-β mindestens 7° beträgt.

5. Reifen mit einer Lauffläche (1) nach einem der Ansprüche 1 bis 4, dadurch gekennzeichnet, daß er eine Scheitelbewehrung (5) aufweist, die aus mindestens zwei Arbeitslagen (52) und (53) aus undehnbaren Metallseilen zusammengesetzt ist, die von der einen Lage (52) zur folgenden (53) überkreuz laufen und dabei zur Umfangsrichtung Winkel bilden, die zwischen 10° und 30° liegen, wobei die axialen Breiten L₅₂ und L₅₃ der Lagen (52) und (53) so sind, daß der axiale Abstand L₁₀ zwischen den beiden am weitesten außenliegenden Wänden der beiden seitlichen Rillen (12) mindestens kleiner ist als die größte Breite L₅₂ (L₅₃) und bevorzugt kleiner als beide Breiten.

## Claims

1. A tread (1) for a tyre equipped with a crown reinforcement (5) composed of at least two working crown plies (52) and (53) and bearing on its sidewalls an indication that it must be mounted on an axle subject to a driving torque and a marking means indicating the direction of rotation corresponding to forward travel of the vehicle thus equipped, comprising wide (10, 12) and narrow (11) circumferential grooves which define between them circumferential ribs (20) provided with transverse incisions (30), which are inclined relative to the direction perpendicular to the tread surface such that the resultant tangential driving force exerted by the ground on the tread tends to straighten the incisions toward a zero inclination, characterised in that it comprises three wide circumferential grooves (10, 12), one (10) of which, referred to as the central groove, is centred on the equatorial plane XX' of the tyre, and the other two (12) of which, referred to as lateral grooves, are axially to the outside, and between the central groove (10) and each lateral groove (12), two narrow circumferential grooves (11), said circumferential grooves (10, 11, 12) having depths h₁₀, h₁₁, h₁₂ equal to at most 0.016 times the diameter Dₛ of the tyre, mounted on its operating rim and inflated to the recommended pressure, measured in the equatorial plane, said grooves (10, 11, 12) defining, firstly, six central grooves (20) of equal axial width L₂₀ equal to at most 0.1 times the axial width L of the tread (1) and provided with transverse incisions (30) inclined by an angle of between 10° and 14°, and secondly two lateral ribs (21), each of the ribs (21) having an axial width L₂₁ at least equal to twice the common width L₂₀ of the central ribs (20), and being provided with wide transverse grooves (40).

2. A tread (1) according to Claim 1, characterised in that the wide transverse grooves (40) have an axially variable depth h₄₀ which is between 0.5 and 1 times the maximum depth of the circumferential grooves over an axial distance L₄₀, equal to at least 2/3 of their length, and at most equal to one-third of said maximum depth over the remaining length L'₄₀.

3. A tread (1) according to one of Claims 1 or 2, characterised in that the circumferential distance p₂ between two transverse grooves (40) of lateral ribs (21), which is axially and circumferentially constant, is at least equal to twice the distance p₁ between two incisions (30) of central ribs (20), said distance being axially and circumferentially constant, the distances p₁ and p₂ being measured on the tread surface.

4. A tread according to one of Claims 1 to 3, characterised in that the leading wall (A) of each transverse groove (40) of lateral rib (21) forms with the direction perpendicular to the tread surface an offset angle Â which is greater than the offset angle β formed by the trailing wall (F) of the same groove (40), the difference Â - β being at least 7°.

5. A tyre comprising a tread (1) according to one of Claims 1 to 4, characterised in that it comprises a crown reinforcement (5) composed of at least two working crown plies (52) and (53) of inextensible metal cables, which are crossed from one ply (52) to the next (53), forming angles of between 10° and 30° with the circumferential direction, the axial widths L₅₂ and L₅₃ of the plies (52) and (53) being such that the axial distance L₁₀ between the two axially outermost walls of the two lateral grooves (12) is at least less than the greatest width L₅₂ (L₅₃), and preferably less than both widths.
